# EUROPÄISCHE PATENTSCHRIFT

(11) **EP 1 251 347 B1**
(45) Veröffentlichungstag und Bekanntmachung des Hinweises auf die Patenterteilung: **08.12.2004**
(21) Anmeldenummer: 02007686.5
(22) Anmeldetag: 05.04.2002
(51) Int. Cl.: G01N 21/89

(54) **Vorrichtung zum optischen Abtasten einer laufenden Warenbahn sowie Verfahren zu deren Justierung**
Apparatus to optically monitor a web strip and method of adjustment thereof
Dispositif pour le balayage optique d'une bande de matériau défilante et méthode pour sa mise au point

(30) Priorität: 18.04.2001 DE 10118886
(43) Veröffentlichungstag der Anmeldung: 23.10.2002
(73) Patentinhaber: ERHARDT + LEIMER GmbH, D-86157 Augsburg (DE)
(72) Erfinder: Eisen, Jürgen, 86199 Augsburg (DE); Zott, Stefan, 86459 Gessertshausen (DE)
(74) Vertreter: Witzany, Manfred, Dipl.-Phys., Dr.

(56) Entgegenhaltungen:
- EP-A- 1 099 655
- EP-A- 1 154 225
- WO-A-01/23869
- DE-A- 19 624 905
- US-A- 5 426 509
- US-A- 5 696 591

## Beschreibung

Die Erfindung betrifft eine Vorrichtung zum optischen Abtasten einer laufenden Warenbahn dem Oberbegriff des Patentanspruchs 1 sowie ein Verfahren zu deren Justierung.

Aus der DE 37 09 500 C2 ist eine Vorrichtung zum Abtasten, insbesondere zur Oberflächenanalyse der laufenden Warenbahn bekannt. Diese Vorrichtung wird von einer gegen die Warenbahn gerichteten CCD-Kamera gebildet, die ein Objektiv und ein CCD-Empfangselement aufweist. Um eine vollständige Analyse der Oberfläche einer sehr breiten Warenbahn zu ermöglichen, müssen mehrere dieser Vorrichtungen nebeneinander angeordnet werden. Dabei ist es wichtig, daß die Abtastbereiche der CCD-Empfangselemente exakt fluchtend aufeinander abgestimmt sind.

Aus der DE 32 00 508 C2 ist eine Vorrichtung zur kombinierten Messung der Geschwindigkeit eines Flüssigkeitsstrahls und der erfaßten Länge bekannt. Aus der Kenntnis dieser beiden Meßgrößen läßt sich der Volumenfluß über den Strahlquerschnitt bestimmen. Hierzu weist die Vorrichtung ein von mehreren Dioden gebildetes Empfangselement auf, welches über ein Objektiv und einen Strahlteiler vom Licht beaufschlagt wird, welches der Flüssigkeitsstrahl reflektiert. Durch Verschieben des Empfangselements in axialer Richtung zum Objektiv kann der vom Empfangselement erfaßte Bereich des Flüssigkeitsstrahls variiert werden. Auf diese Weise ist es möglich, den beleuchteten Bereich der Flüssigkeit zu messen.

Der Erfindung liegt die Aufgabe zugrunde, eine Vorrichtung zum optischen Abtasten einer laufenden Warenbahn der eingangs genannten Art zu schaffen, die eine einfache und feinfühlige Justierung des Abtastbereichs der CCD-Kamera ermöglicht. Außerdem soll ein einfaches Verfahren zum Justieren des Abtastbereichs angegeben werden.

Diese Aufgabe wird erfindungsgemäß mit den Merkmalen der Patentansprüche 1 und 8 gelöst.

Die Vorrichtung gemäß Anspruch 1 dient zum optischen Abtasten einer laufenden Warenbahn, insbesondere zur optischen Oberflächenkontrolle. Dabei sollen insbesondere Web-, Druck- und Färbefehler erkannt werden. Grundsätzlich ist es auch vorstellbar, die Vorrichtung zum Erfassen der Randkante oder einer aufgedruckten Markierung der Warenbahn einzusetzen, um den Bahnlauf zu erfassen. Die Vorrichtung ist von mindestens einer gegen die Warenbahn gerichteten CCD-Kamera gebildet, die ein Objektiv und ein CCD-Empfangselement aufweist. Da sich die Warenbahn an der CCD-Kamera vorbeibewegt, ist es grundsätzlich ausreichend, als CCD-Empfangselement ein Zeilenempfangselement einzusetzen, bei dem sämtliche lichtempfindlichen Fotodioden in einer Reihe nebeneinander angeordnet sind. Durch Erstellen mehrerer, zeitlich versetzter Zeilenaufnahmen kann aufgrund der Bewegung der Warenbahn ein vollständiges Bild der Oberfläche der Warenbahn gewonnen werden. Insbesondere bei breiten Warenbahnen reicht der Abtastbereich einer einzelnen CCD-Kamera nicht aus, um die Oberfläche der Warenbahn über ihre gesamte Breite zu erfassen. Daher werden im allgemeinen mehrere CCD-Kameras eingesetzt, die über die Breite der Warenbahn verteilt sind. Diese CCD-Kameras müssen derart aufeinander ausgerichtet sein, daß deren Abtastbereiche zueinander fluchten, so daß die einzelnen CCD-Kameras zusammengenommen eine durchgehende, quer zur Bahnlaufrichtung verlaufende Abtastlinie ergeben. Auf diese Weise ist sichergestellt, daß die von den einzelnen CCD-Kameras erzeugten Bilder korrekt zu einem Gesamtbild zusammensetzbar sind, so daß auch Fehler im Übergangsbereich zwischen zwei CCD-Kameras korrekt erkannt werden können. Um eine lückenlose Abtastung der Warenbahn mit den CCD-Kameras zu erzielen, ist es wichtig, die Abtastbereiche mit geringem Überlapp korrekt aufeinander und auf die schmalbandig beleuchtete Warenbahn einzustellen. Doch auch bei Verwendung einer einzigen CCD-Kamera ist es wichtig, diese so zu positionieren, daß sich der linienhaft ausgeleuchtete Bereich der Warenbahn im Abtastbereich der CCD-Kamera befindet. Um insbesondere die Feinjustierung der Abtastbereiche der CCD-Kameras vorzunehmen, ist erfindungsgemäß vorgesehen, das CCD-Empfangselement der CCD-Kamera relativ zu dessen Objektiv quer zu dessen optischer Achse zu verstellen. Damit genügt es, das relativ leichte CCD-Empfangselement zu verstellen, ohne das Objektiv mit der gegebenenfalls vorhandenen Autofocus-Steuereinrichtung mitbewegen zu müssen. Da das Objektiv der CCD-Kamera mit dem CCD-Empfangselement nicht mitbewegt wird, gerät letzteres zwar außerhalb der optischen Achse des Objektivs, dies kann jedoch insbesondere für die Feinjustierung des Abtastbereichs leicht hingenommen werden. Um die CCD-Kameras korrekt ausrichten zu können, ist im Bereich der Warenbahnebene eine Schablone fixiert, die zumindest eine quer zur Warenbahnlaufrichtung verlaufende Struktur aufweist. Insbesondere ist daran gedacht, daß diese Schablone eine quer zur Warenbahnlaufrichtung ausgerichtete Linie besitzt, die gegenüber der restlichen Schablone einen ausreichend hohen optischen Kontrast liefert. Damit kann diese Linie gut von der CCD-Kamera erfaßt werden. Um den Justiervorgang möglichst einfach zu gestalten, wird das CCD-Empfangselement von Antrieben verstellt, die mit einer Regeleinrichtung in Wirkverbindung stehen. Diese Regeleinrichtung wird von jenen Signalen beeinflußt, die die CCD-Empfangselemente abgeben. Auf diese Weise erfolgt die Justierung der CCD-Empfangselemente auf die in der Schablone enthaltene Struktur selbsttätig, so daß die Justierung rasch und mit gleichbleibend hoher Güte erfolgt.

Um eine exakte Ausrichtung des Abtastbereichs der CCD-Kamera zu erzielen, reicht es gemäß Anspruch 2 aus, das CCD-Empfangselement in Warenbahnlaufrichtung und quer zur optischen Achse des Objektivs verschiebbar zu halten. Eine zusätzliche Verschiebung des CCD-Empfangselements quer zur Warenbahnlaufrichtung ist grundsätzlich entbehrlich, da diese Ausrichtungsfehler durch Wahl eines entsprechenden Überlapps zwischen den CCD-Kameras berücksichtigt werden können.

Um die einzelnen Bildzeilen, die von den CCD-Empfangselementen erzeugt werden, leicht zu einem Bild zusammensetzen zu können, ist es wichtig, daß diese parallel zueinander ausgerichtet sind. Im gesamten Aufbau der Halterungen der CCD-Kameras sind jedoch Fertigungstoleranzen bezüglich der Ausrichtung der Empfangszeile des CCD-Empfangselements enthalten, die zu einer für die Auswertung des empfangenen Bildes relevanten Abweichung dieser Ausrichtung von der idealen Parallelität führen. Deshalb ist es gemäß Anspruch 3 günstig, wenn das CCD-Empfangselement auch um eine in etwa parallel zur optischen Achse des Objektivs ausgerichtete Drehachse verdrehbar ist. Im allgemeinen genügt eine Verdrehung um 1° bis 3°, da die erwähnten Fertigungstoleranzen ausreichend klein sind. Damit kann die Lichtquelle ein besonders schmales Lichtbündel aussenden, wobei trotzdem gewährleistet ist, daß die CCD-Kameras nur den beleuchteten Abschnitt der Warenbahn erfassen.

Um die geforderte Verstellbarkeit des CCD-Empfangselements möglichst einfach realisieren zu können, ist es gemäß Anspruch 4 vorteilhaft, dieses auf einem Drehtisch zu halten, der drehbar an einem Schiebeschlitten abgestützt ist. Damit kann das CCD-Empfangselement sehr einfach sowohl gedreht als auch quer zur optischen Achse des Objektivs verschoben werden, wobei der erforderliche mechanische Aufwand trotzdem gering bleibt.

Zur Erzielung einer präzisen Verschiebung bzw. Verdrehung des CCD-Empfangselements ist es wichtig, den Drehtisch bzw. den Schiebeschlitten möglichst spielfrei anzutreiben. Da zum Antrieb des Drehtisches bzw. des Schiebeschlittens stets spielbehaftete Getriebe erforderlich sind, ist es gemäß Anspruch 5 günstig, dieses Spiel durch mindestens eine am Drehtisch bzw. Schiebeschlitten angreifende Feder auszuschalten.

Um einen einfachen und gleichzeitig präzisen Antrieb des Drehtisches und des Schiebeschlittens zu gewährleisten, ist es gemäß Anspruch 6 günstig, wenn am Drehtisch zwei Spindelmuttern angreifen. In jede Spindelmutter greift eine von einem Stellmotor angetriebene Gewindespindel ein, wobei als Stellmotor vorzugsweise ein Servo- oder Schrittmotor eingesetzt wird. Durch synchron gleichsinniges Verdrehen der beiden Gewindespindeln wird der Schiebeschlitten ohne Drehung des Drehtisches entlang einer Führung verschoben. Durch synchron gegensinniges Verdrehen der beiden Gewindespindeln wird dagegen der Drehtisch verdreht, ohne den Schiebeschlitten zu bewegen. Bei der Verdrehung des Drehtisches führen die Gewindespindeln keine reine Schiebebewegung aus, sondern sie werden zusätzlich geringfügig verschwenkt. Da die erforderlichen Drehwinkel zur Verdrehung des Drehtisches sehr gering sind, ist es zur Vereinfachung des Aufbaus der Vorrichtung zweckmäßig, die Gewindespindel in der Spindelmutter bzw. im Stellmotor begrenzt verschwenkbar auszubilden, so daß keine zusätzlichen Mittel zum Ausgleich der Schwenkbewegung der Gewindespindel erforderlich sind. Vorzugsweise greift die Gewindespindel mit Spiel in die Spindelmutter bzw. in den Stellmotor ein, so daß die erforderliche Schwenkbewegung der Gewindespindel von diesem Gewindespiel aufgenommen werden kann. Durch die vorgeschlagene einseitige Federbelastung des Drehtisches bzw. des Schiebeschlittens wirkt sich dieses Spiel nicht auf die Präzision der Bewegung des CCD-Empfangselements aus.

Um die Abtastbereiche der einzelnen CCD-Kameras mit geringem, vorgegebenem Überlapp aufeinander einstellen zu können, ist es wichtig, die absolute Position der einzelnen CCD-Kameras an der Warenbahn zu erfassen. Zu diesem Zweck weist gemäß Anspruch 7 die Schablone eine digitale Codierung auf, die vom CCD-Empfangselement erfaßt wird. Die Codierung besteht aus einer Folge von Bits, die vom CCD-Empfangselement abgetastet werden. Da ein Anfahren eines Meßbereichs-Nullpunkts durch die einzelnen CCD-Kameras zu aufwendig ist, enthält die Codierung n-Bit-Codes, welche eindeutig die absolute Position des CCD-Empfangselements wiedergeben. Dabei ist es wichtig, daß jede beliebige Teilfolge von n unmittelbar aufeinander folgenden Bits einen eindeutigen n-Bit-Code liefert. In diesem Fall kann an jeder beliebigen Stelle innerhalb der Folge von Bits mit dem Lesen von n-Bits begonnen werden, . wobei trotzdem gesichert ist, daß der auf diese Weise eingelesene Code zur eindeutigen Positionsbestimmung des CCD-Empfangselements geeignet ist. Damit reicht das Erfassen von n aufeinanderfolgenden Bits der Folge völlig aus, um die Position zu bestimmen, so daß nur ein sehr kleiner Ausschnitt der Folge von Bits ausgewertet werden muß.

Zum Justieren der vorgenannten Vorrichtung zum optischen Abtasten einer laufenden Warenbahn mittels mindestens eines CCD-Empfangselements hat sich das Verfahren gemäß Anspruch 8 bewährt. Dabei wird zunächst eine Schablone im Bereich der Warenbahnebene fixiert, die eine quer zur Warenbahnlaufrichtung verlaufende Struktur aufweist. Diese Struktur ist vom CCD-Empfangselement erfaßbar. Vorzugsweise wird die Struktur von einer aufgedruckten, quer zur Warenbahnlaufrichtung verlaufenden Linie gebildet. Die Fotodioden des CCD-Empfangselements erzeugen Signale, die davon abhängen, ob diese die Struktur oder einen Bereich der Schablone neben der Struktur erfaßt. Beispielsweise könnte die Struktur von einer weißen Linie gebildet sein, die auf einer im übrigen schwarzen Schablone aufgedruckt ist. Das von der weißen Linie reflektierte Licht erzeugt in den entsprechenden Fotodioden ein Fotosignal, während die schwarze Fläche der Schablone im wesentlichen einen Null-Pegel an den Empfängerdioden ergibt. Die von den Fotodioden erzeugten Signale werden dahingehend ausgewertet, welche der Fotodioden die Struktur und welche Bereiche neben der Struktur erfassen. In Abhängigkeit vom Ergebnis dieser Auswertung wird das CCD-Empfangselement derart verstellt, daß dieses auf die Struktur ausgerichtet wird. Damit erfolgt die Justierung ohne Zutun des bedienenden Personals und folglich selbsttätig. Der Justiervorgang wird damit sehr rasch und mit gleichbleibend hoher Güte durchgeführt. Nach erfolgter Justierung wird das CCD-Empfangselement in der eingestellten Lage gehalten, so daß anschließend die Schablone entfernt werden kann, um mit dem CCD-Empfangselement Oberflächenstrukturen der laufenden Warenbahn abzutasten.

Zur Erzielung einer möglichst präzisen Justierung des CCD-Empfangselements ist es erforderlich, daß die auf der Schablone aufgebrachte Struktur relativ schmal ausgebildet ist. Dies hat jedoch in der Regel zur Folge, daß vor Beginn des Justiervorgangs die Struktur mit hoher Wahrscheinlichkeit vollständig außerhalb des Erfassungsbereichs des CCD-Empfangselements liegt. In diesem Fall ist es gemäß Anspruch 9 vorteilhaft, wenn zunächst das CCD-Empfangselement so weit quer zur Struktur verschoben wird, daß diese im Abtastbereich wenigstens einer der Fotodioden liegt. Nach dieser Grobjustierung können anhand der von den Fotodioden erzeugten Signale zumindest Anhaltspunkte über den möglichen Verlauf der Struktur der Schablone relativ zu den CCD-Empfangselementen gewonnen werden. Diese sind für die weitere Justierung der CCD-Empfangselemente wichtig. Insbesondere kann aus einer Auswertung der Position jener Fotodioden innerhalb des CCD-Empfangselements, die ein entsprechendes aktives Signal liefern, der Schnittpunkt der Struktur der Schablone mit der Abtastlinie des CCD-Empfangselements bestimmt werden. Aus der Anzahl der ein aktives Signal liefernden Fotodioden kann auf den Winkel geschlossen werden, den die beiden vorgenannten Linien miteinander einschließen.

Zur Erzielung eines möglichst einfachen und trotzdem effizienten Justieralgorithmus ist es gemäß Anspruch 10 günstig, wenn das CCD-Empfangselement derart verdreht und verschoben wird, daß jeweils die Anzahl der die Struktur der Schablone erfassenden Fotodioden maximiert wird. Diese Maximierungs-Vorschrift reicht grundsätzlich aus, um die CCD-Empfangselemente mit einer endlichen Zahl von Schritten auf die Struktur auszurichten. Dabei erfolgen die Verdrehungen und Verschiebungen des CCD-Empfangselements vorzugsweise alternierend zueinander, um eine gegenseitige Beeinflussung beider Justierarten möglichst klein zu halten. Durch Verdrehen des CCD-Empfangselements wird die Anzahl der die Struktur erfassenden Elemente um so größer, je kleiner der Winkel zwischen beiden ist. Falls die Drehachse des CCD-Empfangselements nicht in deren Erfassungsbereich fällt, ergibt sich durch die Verdrehung des CCD-Empfangselements eine scheinbare Verschiebung der Struktur relativ zu den Fotodioden. Diese scheinbare Verschiebung wird jeweils zwischen zwei Verdrehungen durch eine entsprechende Verschiebung der CCD-Empfangselemente korrigiert.

Um die Effizienz des Justieralgorithmus zu verbessern, ist es schließlich gemäß Anspruch 11 vorteilhaft, wenn die Verschiebung des CCD-Empfangselements derart erfolgt, daß sich die Struktur in etwa symmetrisch durch die Drehachse erstreckt. Falls das CCD-Empfangselement in etwa symmetrisch zur Drehachse angeordnet ist, genügt es in der Regel, diese soweit zu verschieben, daß die ein aktives Signal liefernden Fotodioden in etwa symmetrisch um die mittlere Fotodiode des CCD-Empfangselements verteilt sind. Durch diese Maßnahme wird erreicht, daß sich die Drehachse in etwa im Erfassungsbereich des CCD-Empfangselements befindet. Damit ist die von der anschließenden Verdrehung hervorgerufene scheinbare Verschiebung der Struktur besonders gering. Dies hat wiederum zur Folge, daß nach der Verdrehung des CCD-Empfangselements nur eine sehr geringe Verschiebung derselben erfolgen muß, so daß das Justierverfahren insgesamt in sehr wenigen Schritten zu einer optimalen Justierung des CCD-Empfangselements führt. Grundsätzlich ist es auch vorstellbar, die Verdrehung und Verschiebung des CCD-Empfangselements gleichzeitig vorzunehmen. In diesem Fall wirkt die Maximierung der Anzahl der die Struktur erfassenden Fotodioden im wesentlichen nur auf die Verdrehung des CCD-Empfangselements ein, während eine erfaßte Asymmetrie der von den Fotodioden erzeugten Signale eine diese ausgleichende Verschiebung des CCD-Empfangselements bewirkt.

Der Erfindungsgegenstand wird beispielhaft anhand der Zeichnung erläutert, ohne den Schutzumfang zu begrenzen.

Es zeigt:
- Figur 1: eine schematische, räumliche Darstellung einer Vorrichtung zum optischen Abtasten einer laufenden Warenbahn,
- Figur 2: einen Ausschnitt einer Schablone zum Justieren der Lage einer CCD-Kamera und
- Figur 3: einen Code der Schablone gemäß Figur 3.

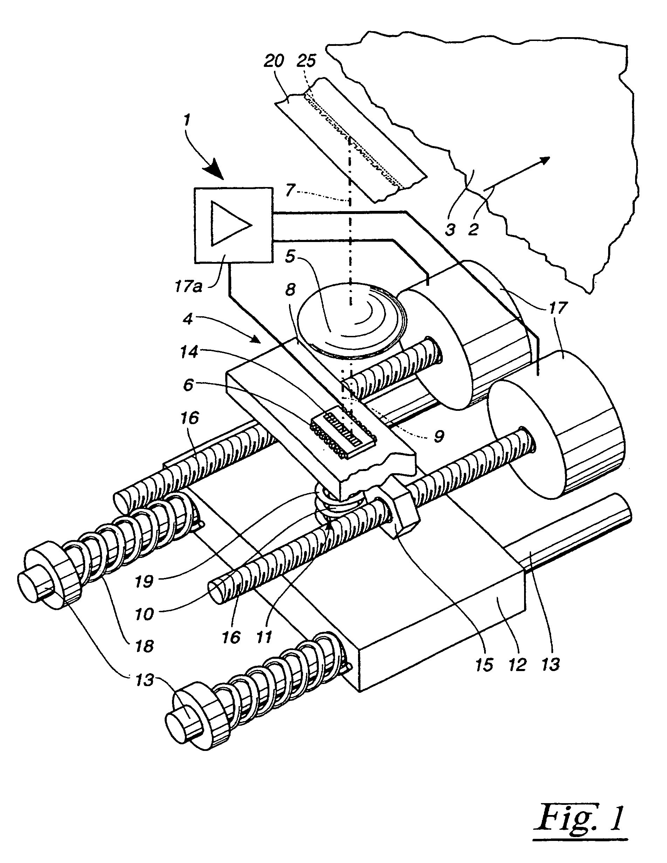

Figur 1 zeigt eine räumliche Darstellung einer Vorrichtung 1 zum optischen Abtasten einer in Richtung 2 bewegten Warenbahn 3. Die Vorrichtung 1 weist eine CCD-Kamera 4 auf, die von einem Objektiv 5 und einem CCD-Empfangselement 6 gebildet ist. Das Objektiv 5 ist dabei lediglich als einfache Linse und das CCD-Empfangselement 6 als Chip dargestellt, um die Darstellung übersichtlicher zu gestalten. Selbstverständlich besteht das Objektiv 5 aus mehreren hintereinander geschalteten Linsen, die in einem entsprechenden Halter abgestützt sind. Das Objektiv 5 ist außerdem in Richtung einer optischen Achse . 7 verschiebbar, um eine Focusierung des Bildes auf das CCD-Empfangselement 6 zu ermöglichen.

Das CCD-Empfangselement 6 ist auf einem gebrochen dargestellten Drehtisch 8 gehalten, der um eine Drehachse 9 verdrehbar ist. Die Drehachse 9 ist dabei parallel zur optischen Achse 7 des Objektivs 5 ausgerichtet. Der Drehtisch 8 weist unterseitig einen Drehzapfen 10 auf, der in einem Drehlager 11 eines Schiebeschlittens 12 abgestützt ist.

Der Schiebeschlitten 12 ist entlang zweier Führungsschienen 13 quer zur optischen Achse 7 des Objektivs 5 in Laufrichtung 2 der Warenbahn 3 verschiebbar gehalten. Damit kann das CCD-Empfangselement 6 um die Drehachse 9 verdreht und entlang der Führungsschienen 13 verschoben werden. Das CCD-Empfangselement 6 ist dabei derart ausgerichtet, daß die Zeile der lichtempfindlichen Fotodioden 14 in etwa senkrecht zu den Führungsschienen 13 angeordnet ist.

Zur Verdrehung und Verschiebung des CCD-Empfangselements 6 ist am Drehtisch 8 beidseits des Drehzapfens 10 jeweils eine Spindelmutter 15 angebracht. In jede dieser Spindelmuttern 15 greift eine Gewindespindel 16 ein, die von jeweils einem Stellmotor 17 zur Drehung angetrieben ist. Der Stellmotor 17 ist vorzugsweise ein Schrittmotor, wobei alternativ auch ein Servomotor eingesetzt werden kann.

Beim Verdrehen des Drehtisches 8 um die Drehachse 9 werden die Spindelmuttern 15 verschwenkt, so daß die beiden Gewindespindeln 16 ebenfalls verschwenkbar sein müssen. Zu diesem Zweck besitzt das Gewinde der beiden Gewindespindeln 16 zu den Spindelmuttern 15 bzw. zu den Stellmotoren 17 ein Spiel, das eine geringe Verschwenkung der Gewindespindeln 16 zuläßt. Damit kann der Drehtisch 8 zwar nur um einen geringen Drehwinkel verdreht werden, dies reicht jedoch zum Ausgleich von Fertigungstoleranzen der Vorrichtung 1 bzw. des CCD-Empfangselements 6 aus. Damit ergibt sich ein besonders einfacher und kompakter Aufbau der Vorrichtung 1.

Um das von den Gewindespindeln 16 hervorgerufene Spiel auszugleichen, sind an den Führungsschienen 13 Federn 18 abgestützt, die einseitig gegen den Schiebeschlitten 12 drücken. Außerdem ist am Schiebeschlitten 12 eine Drehfeder 19 gehalten, die am Drehtisch 8 angreift. Diese beiden Federn 18, 19 drücken den Schiebeschlitten 12 und den Drehtisch 8 soweit in eine Richtung, wie dies das Spiel der Gewindespindeln 16 zuläßt. Damit nimmt der Schiebeschlitten 12 und der Drehtisch 8 in jeder Stellung der Gewindespindeln 16 eine vorgegebene Lage ein, so daß das Spiel der Gewindespindeln 16 ausgeglichen ist.

Zur Justierung des CCD-Empfangselements 6 wird zunächst eine Schablone 20 im Bereich der Warenbahnebene fixiert. Diese Schablone 20 enthält eine Struktur 25, die von den Fotodioden 14 erfaßt werden kann. Die Stellantriebe 17 stehen mit einer Regeleinrichtung 17a in Wirkverbindung, die vom CCD-Empfangselement 6 beeinflußt ist. Hierzu ermittelt die Regeleinrichtung 17a die Anzahl der die Struktur 25 der Schablone 20 erfassenden Fotodioden 14. Diese Anzahl wird durch gegensinniges Ansteuern der beiden Stellantriebe 17 maximiert. Außerdem ermittelt die Regeleinrichtung 17a die Nummer jener Fotodiode 14, welches die Mitte aller ein aktives Signal erzeugenden Fotodioden 14 repräsentiert. Die Nummer dieser aufgefundenen Fotodioden 14 wird mit der Nummer der mittleren Fotodiode 14 des CCD-Empfangselements 6 verglichen, wobei die sich hieraus ergebende Differenz als Regelsignal zur gleichsinnigen Verstellung der beiden Stellantriebe 17 herangezogen wird.

Zur Erzielung eines möglichst effizienten Regelalgorithmus ist dabei das CCD-Empfangselement 6 derart auf dem Drehtisch 8 montiert, daß ihre mittlere Fotodiode 14 möglichst nahe der Drehachse 9 des Drehtisches 8 liegt. Die beiden von der Regeleinrichtung 17a erzeugten Regelsigna. le werden am einfachsten durch Bestimmung der jeweiligen Nummern jener Fotodioden 14 erzeugt, die im Bereich eines Hell-Dunkel-Übergangs liegen. Aus diesen beiden Nummern können durch einfache Differenz- und Mittelwertbildung die erforderlichen Regelsignale erzeugt werden.

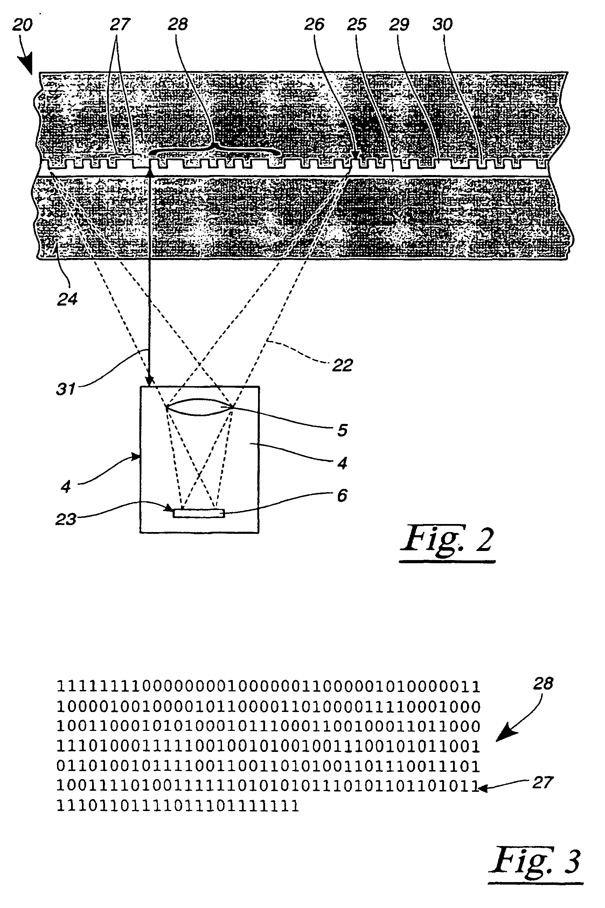

Figur 2 zeigt die Schablone 20 zum Justieren der CCD-Kamera 4. Die Schablone 20 ist in Form eines Lineals ausgebildet, dessen Oberfläche 24 im wesentlichen schwarz eingefärbt ist. Die Schablone 20 weist einen weißen Balken 25 auf, der zum Helligkeitsabgleich der CCD-Kamera 4 und zum Ausrichten des CCD-Empfangselements 6 eingesetzt werden kann. An der Schablone 20 ist außerdem eine Codierung 26 vorgesehen, die aus einzelnen Bits 27 besteht. Diese Codierung 26 ist derart ausgebildet, daß acht aufeinanderfolgende Bits 27 einen eindeutigen Code 28 ergeben. Aufgrund der Eindeutigkeit des Codes 28 ist sichergestellt, daß durch Lesen von acht aufeinanderfolgenden Bits 27 die absolute Position der CCD-Kamera 4 entlang der Schablone 20 bestimmt werden kann. Um zusätzlich zu den einzelnen Bits 27 die Breite jedes Bits 27 feststellen zu können, ist jedes einzelne Bit 27 manchestercodiert, so daß jedes Bit 27 eine weiße Fläche 29 und eine schwarze Fläche 30 aufweist. Dabei bedeutet die Abfolge schwarze Fläche 30-weiße Fläche 29 ein 0-Bit und die Abfolge weiße Fläche 29-schwarze Fläche 30 ein 1-Bit. Damit kann die Codierung 26 unabhängig von der Entfernung 31 des Objekts 21 von der Vorrichtung 20 und unabhängig von der Brennweite des Objektivs 5 korrekt erfaßt werden.

Figur 3 zeigt die Codierung 28 in Form einer 0-1 Darstellung der einzelnen Bits 27. Diese Codierung 28 ist derart aufgebaut, daß jede Abfolge von acht aufeinanderfolgenden Bits 27 einen eindeutigen 8-Bit-Code liefert, der zur Positionsbestimmung herangezogen werden kann.

### Bezugszeichenliste

- 1: Vorrichtung
- 2: Warenbahnlaufrichtung
- 3: Warenbahn
- 4: CCD-Kamera
- 5: Objektiv
- 6: CCD-Empfangselement
- 7: optische Achse
- 8: Drehtisch
- 9: Drehachse
- 10: Drehzapfen
- 11: Drehlager
- 12: Schiebeschlitten
- 13: Führungsschiene
- 14: Fotodiode
- 15: Spindelmutter
- 16: Gewindespindel
- 17a: Regeleinrichtung
- 17: Stellmotor
- 18: Feder
- 19: Drehfeder
- 20: Schablone
- 22: Lichtstrahl
- 23: Fühler
- 24: Oberfläche
- 25: weißer Balken
- 26: Codierung
- 27: Bit
- 28: Code
- 29: weiße Fläche
- 30: schwarze Fläche
- 31: Entfernung

## Patentansprüche

1. Vorrichtung zum optischen Abtasten einer laufenden Warenbahn (3), wobei die Vorrichtung (1) von mindestens einer gegen die Warenbahn (3) gerichteten CCD-Kamera (4) gebildet ist, die ein Objektiv (5) und ein CCD-Empfangselement (6) aufweist, welches einen Bereich der Warenbahn (3) abtastet, **dadurch gekennzeichnet, daß** zur Einstellung des Abtastbereichs der Vorrichtung (1) eine Schablone (20) im Bereich der Warenbahnebene fixiert ist, die zumindest eine quer zur Warenbahnlaufrichtung (2) verlaufende, von der CCD-Kamera (4) erfaßbare Struktur (25) aufweist, und das CCD-Empfangselement (6) relativ zum Objektiv (5) quer zu dessen optischer Achse (7) von mindestens einem Antrieb (17) verstellbar ist, der mit einer Regeleinrichtung (17a) in Wirkverbindung steht, die von den Signalen der CCD-Kamera (4) beeinflußt ist.

2. Vorrichtung nach Anspruch 1, **dadurch gekennzeichnet, daß** das CCD-Empfangselement (6) in Laufrichtung (2) der Warenbahn (3) und quer zur optischen Achse (7) des Objektivs (5) verschiebbar ist.

3. Vorrichtung nach Anspruch 1 oder 2, **dadurch gekennzeichnet, daß** das CCD-Empfangselement (6) um eine in etwa parallel zur optischen Achse (7) des Objektivs (5) ausgerichtete Drehachse (9) verdrehbar ist.

4. Vorrichtung nach mindestens einem der Ansprüche 1 bis 3, **dadurch gekennzeichnet, daß** das CCD-Empfangselement (6) auf einem Drehtisch (8) gehalten ist, der drehbar an einem Schiebeschlitten (12) abgestützt ist.

5. Vorrichtung nach Anspruch 4, **dadurch gekennzeichnet, daß** der Drehtisch (8) und/oder der Schiebeschlitten (12) einseitig durch mindestens eine Feder (18, 19) belastet ist.

6. Vorrichtung nach Anspruch 4 oder 5, **dadurch gekennzeichnet, daß** am Drehtisch (8) zwei Spindelmuttern (15) angreifen, in die jeweils eine von einem Stellmotor (17) angetriebene Gewindespindel (16) eingreift, die in der Spindelmutter (15) und/oder im Stellmotor (17) begrenzt verschwenkbar ist.

7. Vorrichtung nach mindestens einem der Ansprüche 1 bis 6, **dadurch gekennzeichnet, daß** die Schablone (20) eine von der CCD-Kamera (4) erfaßbare, digitale Codierung (26) aufweist, die von einer Folge von Bits (27) gebildet wird, wobei jede beliebige Teilfolge von n unmittelbar aufeinanderfolgenden Bits (27) der Folge einen eindeutigen n-Bit-Code (28) für die absolute Position der CCD-Kamera (4) über der Schablone (20) liefert.

8. Verfahren zum Justieren einer Vorrichtung 1 zum optischen Erfassen einer laufenden Warenbahn (3) mittels mindestens einem CCD-Empfangselement (6), welches Fotodioden (14) aufweist, wobei zum Justieren der Vorrichtung (1) eine Schablone (20) im Bereich der Warenbahnebene fixiert wird, die zumindest eine quer zur Warenbahnlaufrichtung (2) verlaufende Struktur (25) aufweist, die von den Fotodioden (14) erfaßt wird, welche Signale erzeugen, die eine Verstellung des CCD-Empfangselements (6) bewirken, um diese durch Regelung auf die Struktur (25) auszurichten.

9. Verfahren nach Anspruch 8, **dadurch gekennzeichnet, daß** das CCD-Empfangselement (6) zunächst so weit quer zur Struktur (25) verschoben wird, daß diese im Abtastbereich mindestens einer der Fotodioden (14) liegt.

10. Verfahren nach Anspruch 8 oder 9, **dadurch gekennzeichnet, daß** das CCD-Empfangselement (6) derart verschoben und verdreht wird, daß die Anzahl der die Struktur (25) erfassenden Fotodioden (14) maximiert wird.

11. Verfahren nach Anspruch 10, **dadurch gekennzeichnet, daß** die Verschiebung des CCD-Empfangselements (6) derart erfolgt, daß sich die die Struktur (25) erfassenden Fotodioden (14) in etwa symmetrisch um deren Drehachse (9) erstrecken.

## Claims

1. Apparatus for optically scanning a moving product web (3), the apparatus (1) being formed by at least one CCD camera (4) which is aimed at the product web (3) and has an objective (5) and a CCD receiving element (6) which scans a region of the product web (3), **characterized in that**, in order to set the scanning region of the apparatus (1), a template (20) having at least one structure (25) which runs transversely with respect to the product web running direction (2) and which can be registered by the CCD camera (4) is fixed in the region of the product web plane, and the CCD receiving element (6) can be adjusted relative to the objective (5), transversely with respect to its optical axis (7), by at least one drive (17) which is operatively connected to a control device (17a) which is affected by the signals from the CCD camera (4).

2. Apparatus according to Claim 1, **characterized in that** the CCD receiving element (6) can be displaced in the running direction (2) of the product web (3) and transversely with respect to the optical axis (7) of the objective (5).

3. Apparatus according to Claim 1 or 2, **characterized in that** the CCD receiving element (6) can be rotated about an axis of rotation (9) aligned approximately parallel to the optical axis (7) of the objective (5).

4. Apparatus according to at least one of Claims 1 to 3, **characterized in that** the CCD receiving element (6) is held on a turntable (8) which is rotatably supported on a sliding carriage (12).

5. Apparatus according to Claim 4, **characterized in that** the turntable (8) and/or the sliding carriage (12) is/are loaded on one side by at least one spring (18, 19).

6. Apparatus according to Claim 4 or 5, **characterized in that** two spindle nuts (15) act on the turntable (8), in which spindle nuts (15) in each case a threaded spindle (16) driven by an actuating motor (17) engages and can be pivoted to a limited extent in the spindle nut (15) and/or in the actuating motor (17).

7. Apparatus according to at least one of Claims 1 to 6, **characterized in that** the template (20) has a digital code (26) which can be registered by the CCD camera (4) and is formed by a sequence of bits (27), each arbitrary part sequence of n immediately successive bits (27) of the sequence supplying an unambiguous n-bit code (28) for the absolute position of the CCD camera (4) above the template (20).

8. Method of adjusting an apparatus (1) for optically registering a moving product web (3) by means of at least one CCD receiving element (6) which comprises photodiodes (14), in order to adjust the apparatus (1), a template (20) having at least one structure (25) which runs transversely with respect to the product web running direction (2) and which is registered by the photodiodes (14) being fixed in the region of the product web plane, the said photodiodes (14) generating signals which effect adjustment of the CCD receiving element (6) in order to aim the latter at the structure (25) by means of control.

9. Method according to Claim 8, **characterized in that** the CCD receiving element (6) is initially displaced transversely with respect to the structure (25) to such an extent that the latter lies in the scanning region of at least one of the photodiodes (14).

10. Method according to Claim 8 or 9, **characterized in that** the CCD receiving element (6) is displaced and rotated in such a way that the number of photodiodes (14) registering the structure (25) is maximized.

11. Method according to Claim 10, **characterized in that** the CCD receiving element (6) is displaced in such a way that the photodiodes (14) registering the structure (25) extend approximately symmetrically about its axis of rotation (9).

## Revendications

1. Dispositif pour le balayage optique d'une bande de tissu (3) en cours de défilement, le dispositif (1) étant formé d'au moins une caméra à couplage de charge (4) orientée vers la bande (3), qui présente un objectif (5) et un élément de réception à couplage de charge (6) qui balaye une zone de la bande de tissu (3), **caractérisé en ce que** dans la zone du plan de la bande de tissu, pour régler la zone de balayage du dispositif (1), est fixé un gabarit (20) qui présente au moins une structure (25) s'étendant transversalement à la direction de défilement (2) de la bande de tissu, détectable par la caméra à couplage de charge (4), et l'élément de réception à couplage de charge (6) peut être décalé par rapport à l'objectif (5), transversalement à l'axe optique (7) de ce dernier, par au moins un entraînement (17) qui est en liaison active avec un dispositif de régulation (17a) influencé par les signaux de la caméra à couplage de charge (4).

2. Dispositif suivant la revendication 1, **caractérisé en ce que** l'élément de réception à couplage de charge (6) peut être décalé dans la direction de défilement (2) de la bande de tissu (3) et transversalement à l'axe optique (7) de l'objectif (5).

3. Dispositif suivant l'une des revendications 1 et 2, **caractérisé en ce que** l'élément de réception à couplage de charge (6) peut être tourné autour d'un axe de rotation (9) orienté à peu près parallèlement à l'axe optique (7) de l'objectif (5).

4. Dispositif suivant l'une au moins des revendications 1 à 3, **caractérisé en ce que** l'élément de réception à couplage de charge (6) est maintenu sur une table tournante (8) supportée sur un chariot coulissant (12).

5. Dispositif suivant la revendication 4, **caractérisé en ce que** la table tournante (8) et/ou le chariot coulissant (12) sont chargés d'un côté par au moins un ressort (18, 19).

6. Dispositif suivant l'une des revendications 4 et 5, **caractérisé en ce que** deux écrous à broche (15) agissent sur la table tournante (8), dans chacun desquels s'engage une broche filetée (16) entraînée par un moteur de commande (17) et dotée d'une possibilité de pivotement limitée dans l'écrou à broche (15) et/ou le moteur de commande (17).

7. Dispositif suivant l'une au moins des revendications 1 à 6, **caractérisé en ce que** le gabarit (20) présente un codage numérique (26) détectable par la caméra à couplage de charge (4), qui est formé d'une suite de chiffres binaires (27), chaque suite partielle quelconque de n chiffres binaires (27) directement successifs de la suite fournissant un code univoque de n chiffres binaires (28) pour la position absolue de la caméra à couplage de charge (4) sur le gabarit (20).

8. Procédé pour la mise au point d'un dispositif 1 pour la détection optique d'une bande de tissu (3) en cours de défilement au moyen d'au moins un élément de réception à couplage de charge (6) qui présente des photodiodes (14), un gabarit (20) étant fixé dans la zone du plan de la bande de tissu pour la mise au point du dispositif (1), qui présente au moins une structure (25) s'étendant transversalement à la direction de défilement (2) de la bande, qui est et détectée par les photodiodes (14), qui génèrent des signaux provoquant un coulissement de l'élément de réception à couplage de charge (6) pour orienter ce dernier sur la structure (25) par régulation.

9. Procédé suivant la revendication 8, **caractérisé en ce que** l'élément de réception à couplage de charge (6) est d'abord décalé transversalement à la structure (25) jusqu'à ce que cette dernière se situe dans la zone de balayage d'au moins l'une des photodiodes (14).

10. Procédé suivant l'une des revendications 8 et 9, **caractérisé en ce que** l'élément de réception à couplage de charge (6) est décalé et tourné de telle sorte que le nombre des photodiodes (14) détectant la structure (25) est maximisé.

11. Procédé suivant la revendication 10, **caractérisé en ce que** le coulissement de l'élément de réception à couplage de charge (6) est effectué de telle sorte que les photodiodes (14) détectant la structure (25) s'étendent à peu près symétriquement autour de son axe de rotation (9).
